Europäisches Patentamt

European Patent Office

Office européen des brevets

(11) Veröffentlichungsnummer: **0 517 348 A1**

## (12) EUROPÄISCHE PATENTANMELDUNG

(21) Anmeldenummer: **92250141.6**

(22) Anmeldetag: **04.06.92**

(51) Int. Cl.⁵: **E03D 5/00**

(30) Priorität: **04.06.91 DE 4118648**
**11.02.92 DE 9201682 U**

(43) Veröffentlichungstag der Anmeldung:
**09.12.92 Patentblatt 92/50**

(84) Benannte Vertragsstaaten:
**BE DE ES FR GB IT NL**

(71) Anmelder: **KKI HANDELSGESELLSCHAFT FÜR KUNSTSTOFFERZEUGNISSE mbH**
**Wilhelmstrasse 163**
**W-1000 Berlin 20(DE)**

(72) Erfinder: **Röhr, Claus-Peter**
**Wilhelmstrasse 163**
**W-1000 Berlin 20(DE)**

(74) Vertreter: **Christiansen, Henning, Dipl.-Ing.**
**Patentanwalt Pacelliallee 43/45**
**W-1000 Berlin 33(DE)**

(54) **Toilettenanordnung zur Installation ohne festen Entsorgungsanschluss.**

(57) Toilettenanordnung zur Installation ohne festen Entsorgungsanschluß, insbesondere in einem Verkehrsmittel oder Fahrzeug - wie einem Omnibus -, mit einer Toilettenschüssel (3) und einem Auffangbehälter (4), wobei zur Toilettenspülung eine Spülflüssigkeit (1) in die Toilettenschüssel (3) eingeleitet wird und der Inhalt der Toilettenschüssel (3) zusammen mit der eingeleiteten Spülflüssigkeit (1) als Flüssigkeits- bzw. Fäkalgemisch (5) in den Auffangbehälter (4) gelangt, wobei der luft- und feuchtigkeitsdicht geschlossene Auffangbehälter (4) oberhalb seines mit dem Flüssigkeits-/Fäkalgemisch (5) zu füllenden Naßbereichs (4b) ein durch einen Aufsatz (4.1) gebildetes und mit dem übrigen Auffangbehälter verbundenes Restvolumen aufweist sowie eine die weitere Benutzung sperrende Vorrichtung (13), welche aktiviert wird, sobald der Flüssigkeitsstand einen im Restvolumen bildenden Aufsatz (4.1) vorhandenen, oberhalb des Naßbereichs (4b) angeordneten, nicht mit dem Flüssigkeits-/ Fäkalgemisch (5) zu füllenden Trockenbereich (4a) erreicht, wobei der Restvolumen bildende Aufsatz (4.1) so bemessen ist, daß er das beim Einfrieren des den Naßbereich (4b) ausfüllenden Flüssigkeits-/Fäkalgemischs (5) entstehenden Expansionsvolumen aufnimmt.

Fig. 1

EP 0 517 348 A1

Die Erfindung betrifft eine Toilettenanordnung der im Oberbegriff des Anspruchs 1 angegebenen Art.

Verkehrsmittel werden heutzutage zur Erhöhung des Reisekomforts zunehmend mit Toiletten ausgerüstet.

Für den Omnibusreiseverkehr sind beispielsweise heute aufgrund der großen Entfernungen und der wachsenden Komfortansprüche Toiletten erforderlich, die sowohl für den Benutzer als auch für das Wartungspersonal einfach in der Handhabung sind. Die Toiletten müssen eine große Kapazität hinsichtlich der Anzahl der möglichen Toilettenspülungen zwischen zwei Wartungen und der möglichen Benutzungsfrequenz haben.

Zur Toilettenspülung wird bei Wassertoiletten Frischwasser aus einem Spülflüssigkeitsbehälter und bei Chemietoiletten eine im Kreislauf geführte Chemikalienflüssigkeit verwendet. Wassertoiletten mit einer Frischwasserspülung sind den Chemietoiletten vor allem bezüglich der Geruchsbelastung vorzuziehen, da die Geruchsprobleme bei dem nur einmal zur Spülung verwendeten Frischwasser entfallen. Nachteilig bei Wassertoiletten ist aber, daß die Anzahl der möglichen Toilettenspülungen zwischen zwei Wartungen von der Menge an mitgeführtem Frischwasser, vom Spülvolumen und der Größe des Auffangbehälters, in dem sich das Abwasser ansammelt, abhängt und daß die Frischwassermenge, durch deren Platzbedarf und Gewicht, insbesondere bei Flugzeugen und Omnibussen Grenzen gesetzt werden. Demgegenüber wird bei der Verwendung einer Chemietoilette, bedingt durch die Kreislaufführung der Chemikalienflüssigkeit kein Vorratsbehälter benötigt und die Anzahl der möglichen Toilettenspülungen zwischen zwei Wartungen kann erheblich erhöht werden.

Derartige Toilettenanordnungen müssen wegen der in Verkehrsmitteln meist anzutreffenden gedrängten Platzverhältnisse sehr raumsparend ausgeführt sein.

Ein weiteres Problem bekannter Wasser- und Chemietoiletten ist, daß bei hohen Minusgraden das sich im Auffangbehälter ansammelnde Flüssigkeits- bzw. Fäkalgemisch gefrieren kann, so daß die Toiletten nicht mehr betrieben werden können und die Gefahr besteht, daß der Auffangbehälter beschädigt wird.

Der Erfindung liegt daher die Aufgabe zugrunde, bei einer Toilettenanordnung der eingangs genannten Gattung die Anzahl der möglichen Toilettenspülungen zwischen zwei Wartungen auch bei extremen Temperaturen zu erhöhen.

Diese Aufgabe wird mit den kennzeichnenden Merkmalen des Anspruchs 1 gelöst.

Die Erfindung beruht auf der Erkenntnis, daß der Auffangbehälter der Toilettenanordnung in einem Naß- und einem Trockenbereich unterteilt ist, wobei sich das Flüssigkeits- bzw. Fäkalgemisch im Naßbereich sammelt und ungehindert beim Gefrieren in den Trockenbereich des Auffangbehälters ausweichen kann, so daß es nicht zur Beschädigung des Auffangbehälters kommt.

Dabei ist das effektive Volumen des Trockenbereichs derart bemessen, daß es größer ist als die Volumenvergrößerung beim Übergang des im Naßbereich angesammelten Flüssigkeits- bzw. Fäkalgemischs von einer flüssigen in eine feste Phase. Dadurch kann der Auffangbehälter selbst bei gefülltem Naßbereich und extremer Abkühlung nicht infolge der Volumenausdehnung des Inhalts beschädigt werden.

Bei der erfindungsgemäßen Toilettenanordnung bildet ein oberhalb des Naßbereichs des Auffangbehälters angeordneter und mit dem Naßbereich verbundener Aufsatz, der bei bevorzugten Weiterbildungen domartig und/oder quaderförmig ausgestaltet ist, den Trockenbereich. Weiterhin weist die erfindungsgemäße Toilettenanordnung eine die weitere Benutzung sperrende Vorrichtung auf, die aktiviert wird, sobald der Flüssigkeitsstand den oberhalb des Naßbereichs angeordneten Trockenbereich bildenden Aufsatz erreicht.

Bei einer bevorzugten Weiterbildung der erfindungsgemäßen Toilettenanordnung ist die Toilettenschüssel, die vorzugsweise eine Verschlußvorrichtung an ihrem unteren Ende aufweist, innerhalb des Trockenbereich bildenden Aufsatzs des Auffangbehälters angeordnet. Die Anordnung der Toilettenschüssel innerhalb des den Trockenbereich bildenden Aufsatzs ermöglicht den Verzicht auf eine aufwendige Dichtung einer möglichen Verschlußvorrichtung gegenüber dem Auffangbehälter, da die Toilettenschüssel zusammen mit einer möglichen Verschlußvorrichtung eine geschlossene Einheit mit dem Auffangbehälter bilden und die Verschlußvorrichtung lediglich gegenüber der Toilettenschüssel abgedichtet sein muß. Weiterhin können sämtliche Versorgungsleitungen im Trockenbereich bildenden Aufsatz des Auffangbehälters ohne aufwendige Abdichtungen bzw. Schottverschlüsse aus dem Naßbereich des Auffangbehälters geführt werden. Weiterhin vorteilhaft ist, daß der Auffangbehälter im Reparaturfalle durch das Loslösen der Toilettenschüssel zusammen mit der möglichen Verschlußvorrichtung leicht zugänglich wird.

Das effektive Volumen des Trockenbereichs, welches als das Volumen des Trockenbereichs abzüglich dem der eingebauten Toilettenschüssel und eventuell anderer Einbauten definiert wird, beträgt vorzugsweise im wesentlichen 8% des Naßbereichvolumens.

Bei einer bevorzugten Weiterbildung der erfindungsgemäßen Toilettenanordnung ist der den Trockenbereich bildenden Aufsatz bezüglich der Außenwandung des Auffangbehälters nach innen versetzt angeordnet, um zu erreichen, daß selbst bei einer Schräglage des Fahrzeugs eine maximale Menge des Flüssigkeits- bzw. Fäkalgemischs im Naßbereich ansammelbar ist, ohne daß eine wesentliche Menge dieses Flüssigkeits- bzw. Fäkalgemisches bedingt durch die Schräglage in den Trokkenbereich gelangt, da die Höhendifferenz zwischen der oberen und unteren Kante des schrägen Flüssigkeitsspiegels sowohl bei einem zunehmend kleineren Flächenquerschnitt als auch bei einer zunehmend nach innen versetzten Anordnung des Aufsatzs abnimmt.

Der domartige Aufsatz ist bevorzugterweise insbesondere von der Seitenwandung des Behälters entfernt angeordnet, so daß bei einer Querneigung des Verkehrsmittels oder bei in Kurven auftretenden Zentrifugalkräften die durch die Massenbeschleuigungskräfte verursachte Niveauerhöhung im Behälter sich im Bereich des domartigen Aufsatzes auch bei gefülltem Behältern nur vermindert auswirkt.

In Querrichtung des Verkehrsmittels gesehen, ist der Aufsatz um mindestens die Hälfte seiner Querabmessung vom Rand des Auffangbehälters entfernt angeordnet.

Um zu verhindern, daß der Füllstand des angesammelten Flüssigkeits- bzw. Fäkalgemischs im Auffangbehälter über den Naßbereich steigt, ist die erfindungsgemäße Toilettenanordnung bei einer bevorzugten Weiterbildung mit einer als Niveauschalter ausgebildeten eine weitere Benutzung sperrenden Vorrichtung ausgebildet, die an der Übergangsstelle zwischen dem Naß- und dem Trockenbereich im Auffangbehälter angeordnet ist. Die Toilettenanordnung wird dabei automatisch außer Betrieb gesetzt, wenn das Flüssigkeits- bzw. Fäkalgemisch den maximal zulässigen Flüssigkeitsspiegel erreicht hat und der Niveauschalter für eine vorbestimmte Zeitdauer betätigt wurde.

Bei einer weiteren vorteilhaften Weiterbildung der erfindungsgemäßen Toilettenanordnung ist eine unterdruckerzeugende Luftabsaugeinrichtung ebenfalls seitlich am Auffangbehälter angeordnet, die die Abluft von innerhalb des Auffangbehälters absaugt. Bei einer bevorzugten Ausführungsform kann die Abluft aus der dem Auffangbehälter umgebenden Luftraum, vorzugsweise aus einer Kabine, in der die Toilettenanordnung installiert ist, ebenfalls mit der Luftabsaugeinrichtung abgesaugt werden, wobei deren Saugleitung jeweils mindestens eine Öffnung bzw. eine am Ende offene Abzweigleitung zum umgebenden Luftraum und zum Auffangbehälter aufweist. Weiterhin wird die Luftabsaugeinrichtung derart geregelt, daß sie mit dem Verriegeln der Kabine auf voller mit dem Entriegeln der Kabine aber nur auf einer Teillaststufe läuft.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine schematische, teilweise geschnittene, Seitenansicht einer erfindungsgemäßen Toilette, sowie

Figur 2 eine schematische, perspektivische Ansicht des Auffangbehälters mit eingebauter Luftabsaugvorrichtung.

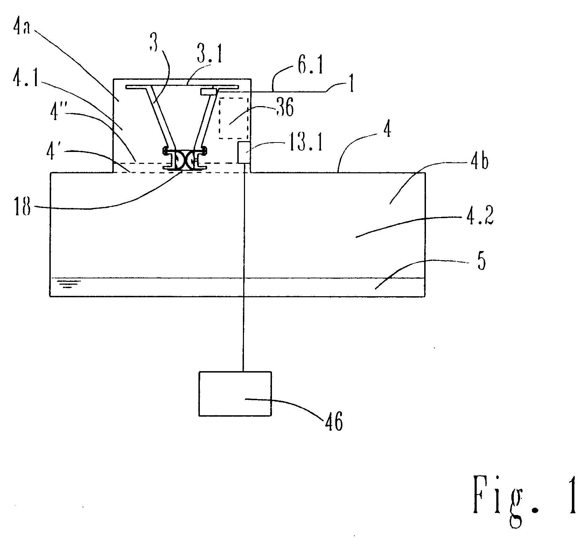

In Figur 1 ist ein bevorzugtes Ausführungsbeispiel der erfindungsgemäßen Toilettenanordnung schematisch dargestellt. Die Toilettenanordnung besteht aus einem Auffangbehälter 4, der in zwei unterschiedlich große Teilvolumina 4.1 und 4.2 unterteilt ist. Das obere Teilvolumen 4.1, das als Restvolumen von einem entsprechenden Aufsatz des Behälters eingeschlossen ist, weist in Querrichtung einen kleineren Flächenquerschnitt als das übrige Volumen 4.2 des Auffangbehälters 4 auf. Mittels einer gestrichelten Linie 4' ist die Trennung zwischen den Volumina 4.1 und 4.2 in der Zeichnung angedeutet.

Der Auffangbehälter 4 ist damit in einen vorwiegenden Naßbereich 4b und einen vorwiegenden Trockenbereich 4a unterteilbar, wobei das sich im Auffangbehälter 4 ansammelnde Flüssigkeits- bzw. Fäkalgemisch 5 in den Naßbereich 4b gelangt und eine trichterförmige Toilettenschüssel 3 innerhalb des vorwiegenden Trockenbereichs 4a des Auffangbehälters 4 vorgesehen ist und die Trennung zwischen den Bereichen 4a und 4b ebenfalls anhand einer gestrichelten Linie 4'' dargestellt ist. Dabei bildet der untere Bereich 4.2 des Auffangbehälters 4 im wesentlichen den Naßbereich 4b des Auffangbehälters 4, während das den Aufsatz bildenden obere Teilvolumen 4.1 den Trockenbereich 4a bildet. Damit bildet das obere Teilvolumen 4.1 im wesentlichen den Trockenbereich, wobei sich eine geringfügige Differenz zwischen dem oberen Teilvolumen 4.1 und dem Trockenbereich durch die Anbringung des die weitere Befüllung des Gesamtbehälters sperrenden Niveauschalters 13.1 ergeben kann, der bevorzugt innerhalb des oberen Teilvolumens 4.1 möglichst in der Nähe der unteren Kante des dieses Volumen beinhaltenden Aufsatzes vorgesehen ist. Das hat den Vorteil, daß dieser Niveauschalter nicht von den sich bei Kurvenfahrten oder einer Neigung des Fahrzeugs einstellenden relativ großen Niveauschwankungen im unteren Behälterteil betroffen ist, welche die Befüllbarkeit des Behälters vorzeitig beenden könnten, wenn sich zufällig im Bereich dieses Schalters ein hoher Pegelstand ergeben sollte. Weitere Ausführungen zur Funktion dieses Schalters 13.1 folgen weiter unten.

Eine Toilettenschüssel 3 ist innerhalb des das obere Teilvolumen einschließenden Aufsatzes 4.2 vorgesehen. Damit wird dieses Volumen zwar vermindert. Das Restvolumen ist jedoch ausreichend, um in seinem vorwiegenden Trockenbereich die im Falle des Einfrierens resultierende Volumenzunahme des Inhalts des das untere Teilvolumen 4.1 erfassenden Auffangbehälters 4 aufzunehmen. Damit befindet sich einerseits die "Sitzfläche" in einer geeigneten Höhe und andererseits ist die relativ große Masse des gefüllten Auffangbehälters möglichst niedrig gelegen - was zu einem günstigen insgesamt niedrigen Schwerpunkt des Fahrzeugs beiträgt. Darüber hinaus ist neben dem die Schüssel 3 aufnehmenden erhöhten Aufsatz (Teilvolumen 4.1) die Möglichkeit gegeben, unter einer Abdeckung, welche das Niveau des oberen Randes der Toilettenschüssel aufweist, die Steuereinrichtungen für den elektrischen Teil der WC-Anordnung vorteilhaft vorzusehen.

Die Toilettenschüssel 3, in die eine Spülflüssigkeit 1 über eine erste Leitung 6.1 bei jeder Toilettenspülung einleitbar ist, ist im Bereich ihrer oberen Öffnung 3.1 mit dem Auffangbehälter 4 verbunden und weist an ihrer unteren Öffnung 3.2 eine steuerbare Verschlußvorrichtung 18 auf, die eine Abdichtung gegenüber der Toilettenschüssel 3 bildet und nur während eines Toilettenspülvorgangs geöffnet wird. Im übrigen schließt die Verschlußvorrichtung 18 den Auffangbehälter 4 luft- und feuchtigkeitsdicht von der Toilettenschüssel 3 ab.

Der Niveauschalter 13.1 ist, als Teil einer nach seinem Ansprechen die weitere Benutzung der Toilettenanordnung sperrenden Schaltvorrichtung 46, innerhalb des das Teilvolumen 4.1 aufnehmenden Aufsatzes des Auffangbehälters 4 in einer Ansprechhöhe, die den Trennfläche 4'' zwischen Trocken- und Naßbereich 4a und 4b bildet, angeordnet. Der Niveauschalter 13.1 ist relativ zu dem das untere Teilvolumen 4.2 einschließenden Teil des Auffangbehälters 4 vorzugsweise zentral in dessen größtem horizontalen Flächenquerschnitt angeordnet. Dem entspricht die Anordnung an der Innenseite des das Teilvolumen 4.1 aufnehmenden Aufsatzes. Und zwar erfolgt die Anbringung - wie aus der Zeichnung ersichtlich - bei exentrischer Anordnung des Aufsatzes mit dem Teilvolumen 4.1 an derjenigen Seite vor dessen Innenwandung, welche am nächsten zum Zentrum der horizontalen Querschnittsfläche des unteren Teilvolumens 4.2 gelegen ist. Wenn das angesammelte Flüssigkeits- bzw. Fäkalgemisch 5 im Naßbereich 4a des Auffangbehälters 4 das Ansprechniveau des Schalters 13.1 definierten maximalen Füllstand (Grenze Naß- /Trockenbereich 4'') für eine vorbestimmte Zeitdauer erreicht hat, wird eine weitere Toilettenbenutzung von der bevorzugt als zentrale elektronische Steuerungseinrichtung ausgebildeten Schaltvorrichtung 46 bis zur Entsorgung des Auffangbehälterinhalts unterbunden.

Dadurch, daß der Niveauschalter 13.1 im wesentlichen zentral innerhalb des größten horizontalen Flächenquerschnitts des unteren Behälterteils (Volumen 4.2) vorgesehen ist, führt eine durch die Neigung des Fahrzeugs oder eine Beschleunigung bzw. Abbremsung bedingte Änderung des Flüssigkeitsstands kaum zu einem fehlerhaften Ansprechen des Niveauschalters. Außerdem wirken sich etwa aufbauende Wellenbewegungen des Flüssigkeitsspiegels nur reduziert innerhalb des das Teilvolumen 4.1 einschließenden Aufsatzes aus. Die Höhe dieser Wellenbewegungen wird durch eine geringfügige Erhöhung des Anbringungsortes und damit der Ansprechschwelle 4'' (Trennung Naß- /Trockenbereich) des Niveauschalters 13.1 gegenüber der Trennungsfläche 4' zwischen den Teilvolumina 4.2 des Hauptbehälters und dem Teilvolumen 4.1, welches das in seiner horizontalen Erstreckung reduzierte Expansionsvolumen des Aufsatzes bildet.

Damit ist mit dieser bevorzugten Ausführungsform eine maximale Auffüllung des Naßbereichs 4b zur optimalen Ausnutzung der Speicherkapazität des Auffangbehälters 4 gewährleistet, ohne daß es zu einer vorzeitigen Abschaltung der Toilettenanordnung bei noch nicht vollständig gefülltem Auffangbehälter 4 aufgrund von Fahrzeugbewegungen kommen kann.

Das Volumen des Trockenbereichs 4a beträgt im wesentlichen 8% des Volumens des Naßbereichs 4b, so daß der angesammelte Auffangbehälterinhalt bei einer eventuellen Volumenveränderung aufgrund einer Temperaturabsenkung ohne Beschädigung des Auffangbehälters sich leicht in den Trockenbereich 4a hinein ausdehnen kann.

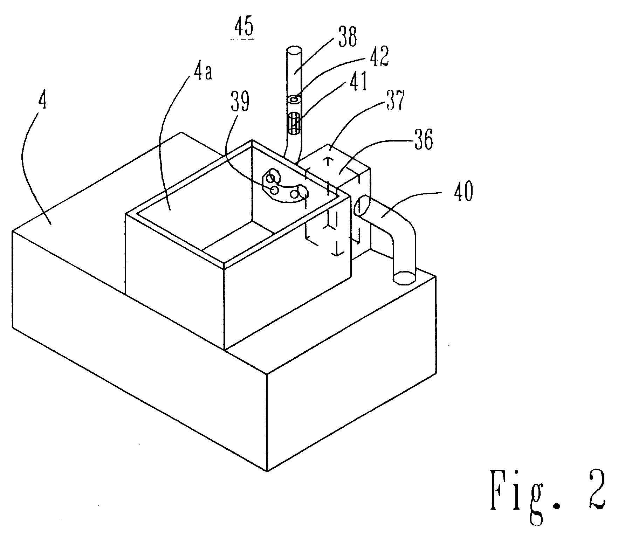

In Figur 2 ist in einer perspektivischen Darstellung wiedergegeben, wie eine elektrische unterdruckerzeugende Luftabsaugvorrichtung 36 der erfindungsgemäßen Toilettenanordnung im Bereich des Aufsatzes angeordnet ist, wobei der Auffangbehälter 4 der Übersichtlichkeit halber ohne eingebaute Toilettenschüssel 3 dargestellt ist. Die Luftabsaugvorrichtung 36 ist an der Außenseite des Auffangbehälters 4 im Bereich des den Trockenbereich 4a bildenden Aufsatzes in einem Gehäuse 37 angebracht, welches mit dem Auffangbehälter 4 konstruktiv zusammengefaßt ist. Mit der Luftabsaugvorrichtung 36 wird durch die Leitungsführung und Ausbildung der Saugleitung 38 sowohl Abluft aus der Kabine 45 als auch Abluft direkt aus dem Auffangbehälter 4 abgesaugt, um durch eine Abluftleitung 40, die bei dieser bevorzugten Ausführungsform den Auffangbehälter 4 durchquert, ohne mit diesem in Verbindung zu stehen, außerhalb des Fahrzeugs ausgestoßen zu werden. Der Abluftschlauch wird aus Raumgründen innerhalb des Auffangbehälters geführt, da damit das für die Toilettenanordnung zur Verfügung stehende Raumvolumen voll von dem Auffangbehälter 4 genutzt werden kann. Dabei weist die Luftabsaugvorrichtung 36 eine in der Kabine 45 endende Saugleitung 38 auf, die mindestens teilweise von der Luftabsaugvorrichtung 36 ausgehend durch den Auffangbehälter 4 zur Kabine 45 geführt wird und die im Inneren des Auffangbehälters 4 mit mindestens einer Öffnung 39 in ihrer Leitungswandung versehen ist. Von der Luftabsaugvorrichtung 36 ausgehend ist ein leicht gefedertes Rückschlagventil 41 und eine entsprechende Anschlagsfläche 42 in der Saugleitung 38 hinter dem die Öffnungen 39 aufweisenden Bereich angeordnet. Somit wird verhindert, daß Abluft vom Auffangbehälter 4 bei abgeschalteter Luftabsaugvorrichtung 36 über die Saugleitung 38 in die Kabine 45 gelangen kann.

Bei einer hier nicht dargestellten weiteren Ausführungsform der erfindungsgemäßen Luftabsaugvorrichtung kann der Auffangbehälter eine mit einer Rückschlagvorrichtung versehene Öffnung aufweisen, in die die durch den Auffangbehälter geführte Saugleitung mündet. Die durch den Auffangbehälter geführte Saugleitung kann entweder mit mindestens einer Öffnung in der Leitungswandung oder kann verzweigt mit einer offen im Innenraum des Auffangbehälters endenden Abzweigung ausgebildet sein. Eine bei Unterdruck in die Saugleitung hineinklappende und bei Ausschaltung der Luftsaugvorrichtung wieder die Öffnung verschließende flexible Rückschlagklappe wird bevorzugt als Rückschlagvorrichtung verwendet.

Bei einer anderen nicht dargestellten Ausführungsform der Luftabsaugvorrichtung kann eine verzweigte Saugleitung außerhalb des Auffangbehälters geführt werden, wobei die eine offen endende Abzweigung in den Auffangbehälter geführt wird und die andere offen endende aber mit einer Rückschlagvorrichtung versehene Abzweigung in der Kabine endet.

Bei allen Ausführungsformen kann somit mittels der erfindungsgemäßen Luftabsaugvorrichtung sowohl Abluft aus dem Auffangbehälter als auch aus der den Auffangbehälter umgebenden Kabine direkt oder indirekt abgesaugt werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

**Patentansprüche**

1. Toilettenanordnung zur Installation ohne festen Entsorgungsanschluß, insbesondere in einem Verkehrsmittel oder Fahrzeug - wie einem Omnibus -, mit einer Toilettenschüssel (3) und einem Auffangbehälter (4), wobei zur Toilettenspülung eine Spülflüssigkeit (1) in die Toilettenschüssel (3) eingeleitet wird und der Inhalt der Toilettenschüssel (3) zusammen mit der eingeleiteten Spülflüssigkeit (1) als Flüssigkeits- bzw. Fäkalgemisch (5) in den Auffangbehälter (4) gelangt,

**dadurch gekennzeichnet,**

daß der luft- und feuchtigkeitsdicht geschlossene Auffangbehälter (4) oberhalb seines mit dem Flüssigkeits-/Fäkalgemisch (5) zu füllenden Naßbereichs (4b) ein durch einen Aufsatz (4.1) gebildetes und mit dem übrigen Auffangbehälter verbundenes Restvolumen aufweist sowie eine die weitere Benutzung sperrende Vorrichtung (13), welche aktiviert wird, sobald der Flüssigkeitsstand einen im Restvolumen bildenden Aufsatz (4.1) vorhandenen, oberhalb des Naßbereichs (4b) angeordneten, nicht mit dem Flüssigkeits-/Fäkalgemisch (5) zu füllenden Trockenbereich (4a) erreicht, wobei der Restvolumen bildende Aufsatz (4.1) so bemessen ist, daß er das beim Einfrieren des den Naßbereich (4b) ausfüllenden Flüssigkeits-/Fäkalgemischs (5) entstehenden Expansionsvolumen aufnimmt.

2. Toilettenanordnung nach Anspruch 1, **dadurch gekennzeichnet,** daß der Aufsatz (4.1) domartig ausgestaltet ist.

3. Toilettenanordnung nach einem der vorangehenden Ansprüche, **dadurch gekennzeichnet,** daß die Toilettenschüssel (3) innerhalb des Aufsatzes (4.1) angeordnet ist.

4. Toilettenanordnung nach einem der vorangehenden Ansprüche, **dadurch gekennzeichnet,** daß das Volumen des Trockenbereichs (4a) - gegebenenfalls abzüglich des Volumens der im Trockenbereich (4a) eingebauten Toilettenschüssel (3), im wesentlichen 8% des Volumens des Naßbereichs (4b) entspricht.

5. Toilettenanordnung nach einem der vorangehenden Ansprüche, **dadurch gekennzeichnet,** daß der domartige Aufsatz (4.1) bezüglich der Außwandungen des Auffangbehälters (4) nach innen versetzt angeordnet ist, so daß bei einer betriebsbedingten Neigung des Auffangbehälters (4) der Flüssigkeitsanstieg im Trockenbereich (4a) wesentlich geringer ist als im Bereich der Außenwandung des Auffangbehälters (4), so daß auch in diesem Fall das Expansionsvolumen erhalten bleibt.

6. Toilettenanordnung nach einem der vorangehenden Ansprüche, **dadurch gekennzeichnet,** daß der domartige Aufsatz (4.1) und/oder
der Auffangbehälter (4) quaderförmig ausgebildet sind.

7. Toilettenanordnung nach Anspruch 1, **dadurch
gekennzeichnet,** daß die die weitere Benutzung sperrende Vorrichtung (13) einen Niveauschalter (13.1) aufweist.

8. Toilettenanordnung nach Anspruch 1, **dadurch
gekennzeichnet,** daß die Toilettenschüssel
(3) in ihrem Abflußbereich eine Verschlußvorrichtung (18) aufweist, welche einen absperrbaren Durchlaß zwischen Toilettenschüssel (3)
und Auffangbehälter (4) bildet, wobei die Verschlußvorrichtung (18) selbst in ihrem Randbereich mit der Toilettenschüssel (3) luft- und
feuchtigkeitsdicht verbunden ist.

9. Toilettenanordnung nach Anspruch 6, **dadurch
gekennzeichnet,** daß im Bereich des Aufsatzes (4.1) eine unterdruckerzeugende Luftabsaugvorrichtung (36) zum Absaugen der Abluft
vom Auffangbehälter (4) vorgesehen ist.

10. Toilettenanordnung nach Anspruch 9, **dadurch
gekennzeichnet,** daß die Luftabsaugvorrichtung (36) über eine entsprechende Verzweigung und/oder Führung und/oder Ausbildung
einer Saugleitung (38) gleichzeitig mit dem außerhalb des Auffangbehälters (4) befindlichen
Luftraum verbunden ist.

11. Toilettenanordnung nach Anspruch 10, **dadurch gekennzeichnet,** daß die Saugleitung
(38) mindestens teilweise durch den Auffangbehälter (4) verläuft und daß dieser Bereich
der Saugleitung (38) mindestens eine Öffnung
(39) in der Leitungswandung aufweist.

12. Toilettenanordnung nach Anspruch 10, **dadurch gekennzeichnet,** daß ein federnd gelagertes Rückschlagventil (41) in der Saugleitung
(38) angeordnet ist, welches bei außer Betrieb
befindlicher Luftabsaugvorrichtung (36) verhindert, daß Abluft vom Auffangbehälter (4) über
die Saugleitung (38) in die Kabine (45) gelangt.

13. Toilettenanordnung nach einem der vorangehenden Ansprüche, **dadurch gekennzeichnet,** daß eine verriegelbare Kabine (45) vorgesehen ist, wobei die Austrittsöffnung der Luftabsaugvorrichtung (36) außerhalb der Kabine
(45) angeordnet ist.

14. Toilettenanordnung nach einem der Ansprüche 9 bis 13, **dadurch gekennzeichnet,** daß die
Luftabsaugvorrichtung (36) durch den Verriegelungsmechanismus der Kabine (45) aktivierbar
ist.

15. Toilettenanordnung nach einem der Ansprüche
9 bis 14, **dadurch gekennzeichnet,** daß die
Luftabsaugvorrichtung (36) in einem Gehäuse
(37) angeordnet ist, welches mit dem Auffangbehälter (4) konstruktiv zusammengefaßt ist.

EP 0 517 348 A1

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-7 900 826 (NORLIN) <br><br> * Zusammenfassung * <br> * Seite 3, Zeile 15 - Seite 4, Zeile 21; Abbildungen 1-3 * <br> --- | 1-3,6,8, 9,11 | E03D5/00 |
| A | CH-A-675 198 (METALLEGER S.A.) <br><br> * Spalte 2, Zeile 9 - Zeile 59; Abbildungen 1-4,6 * <br> --- | 1,3,5,6, 8 | |
| A | EP-A-0 010 962 (THETFORD CORPORATION) <br> * Seite 2, Zeile 23 - Seite 3, Zeile 20 * <br> * Seite 7, Zeile 12 - Seite 8, Zeile 22 * <br> * Seite 11, Zeile 25 - Zeile 32; Abbildungen 2,10 * <br> --- | 1-3,6,8 | |
| A | US-A-4 107 795 (CARTER) <br><br> * Spalte 2, Zeile 38 - Zeile 53 * <br> * Spalte 3, Zeile 68 - Spalte 4, Zeile 2 * <br> * Spalte 5, Zeile 49 - Zeile 53 * <br> * Spalte 6, Zeile 19 - Zeile 30; Abbildung 3 * <br><br> ----- | 9,11,13, 15 | **RECHERCHIERTE SACHGEBIETE (Int. Cl.5)** <br><br> E03D <br> B60R <br> B61D <br> B63B <br> B64D |

Der vorliegende Recherchenbericht wurde für alle Patentansprüche erstellt

| Recherchenort | Abschlußdatum der Recherche | Prüfer |
|---|---|---|
| DEN HAAG | 14 AUGUST 1992 | BLOMMAERT S. |